# EUROPEAN PATENT SPECIFICATION

(11) **EP 1 010 403 B1**
(45) Date of publication and mention of the grant of the patent: **17.09.2008**
(21) Application number: 99203861.2
(22) Date of filing: 19.11.1999
(51) Int. Cl.: A61C 13/275, A61C 13/003, A61C 13/20

(54) **Dental kit**
Dental-Kit
Kit dentaire

(30) Priority: 20.11.1998 NL 1010611
(43) Date of publication of application: 21.06.2000
(73) Proprietor: Schafrat, Bart, 1019 EE Amsterdam (NL)
(72) Inventor: Schafrat, Bart, 1019 EE Amsterdam (NL)
(74) Representative: du Pont, Jeroen

(56) References cited:
- WO-A-97/40773
- DE-A- 3 335 642
- DE-A- 3 537 253
- US-A- 3 641 670
- US-A- 4 713 005
- US-A- 4 950 162

## Description

The invention relates to a dental set for making a dental prosthesis to replace one or more dental elements.

A dental set of this kind is known from European patent application No. 0 259 052. According to said document, a connecting bar comprising a central part and an adjustable part movably connected thereto is placed between two dental elements above the gum surface in the space where the dental prosthesis is to be fitted. The adjustable part can be set to a desired height relative to the gum surface. Two separate mould halves are placed in surrounding relation to the connecting bar between the central part of the connecting bar and the adjacent elements, which mould halves join the vertically adjustable part at their ends remote from the occlusal surfaces.

It is a drawback of this prior art method that it is difficult to set the correct height of the vertically adjustable part which is connected to the connecting bar. Moreover, it is practically inevitable that irregular edges are formed on the joining edges of the two mould halves. Also the connection of said halves to the vertically adjustable part is difficult to check when carrying out the method.

It is an object of the invention to provide a dental set with which it is easier to make a dental prothesis to replace one or more dental elements.

According to the invention, in order to accomplish that objective, there is provided a dental set according to claim 1. The dental set allows after placing of a connecting bar between two adjacent elements, in such a manner that said bar rests with its ends in recesses in the respective elements, the placing of a mould between the elements, which mould is closed on the side facing the jaw and which is provided with an opening on the side remote from the jaw, and which is also provided with recesses for receiving the connecting bar, the curing in the mould of a curable material, thus forming a replacement element, the fixation of the prosthesis to the adjacent elements and the removal of the mould.

These aspects of the invention make it possible to make a dental prosthesis in a very simple manner, with a small number of operations being required. When the recesses in the adjacent elements are already present, it is possible thereby to correctly position the mould and to mark the location of the recesses thereon, after which the recesses in the mould can be formed in a simple and precise manner. Then the mould and the connecting bar can be placed back, after which the curable material can be introduced into the mould.

Preferably, the dimension in longitudinal direction of the recess in each adjacent element into which the connecting bar is placed is maximally one sixth of the length of the element in that direction. As it is, the recess will not extend any further than the enamel of the dental element in that case. Moreover, the recess will not affect the occlusal surface of the dental elements in that case.

The execution of the method is further facilitated when moulds of various sizes are available. It is in particular preferable when a separate mould is available for each type of dental element, and that in various sizes.

It is furthermore preferable for the curable material to be available in various colour shades, because the replacement element can have the same colour as the adjacent elements in that case. This is in particular of major importance when the prosthesis is intended for placement at the front of the mouth.

Furthermore it is preferred to use a method wherein the occlusal surface of the replacement element is made of a layer of a highly wear resistant curable material. This will prolong the life of the prosthesis considerably.

The invention according to claim 1 relates to a dental set comprising a plurality of connecting bars intended for placement between two dental elements on either side of an element to be replaced, and a plurality of moulds for forming a replacement element. Preferably, such a set also includes a curable material for forming a replacement element.

When the mould is filled with the curable material, the connecting bar will be surrounded by said curable material. When the mould is filled to a sufficient degree, an element will have been formed after curing whose occlusal surface is to be formed more precisely yet in a finishing operation. It is also possible, however, to place a cap on the mould before the complete curing of the curable material takes place. Such a cap preferably has the shape of the occlusal surface of the dental element to be replaced. Said cap may for example be made of a relatively deformable material. When the cap is placed on the mould, after said mould has been filled with a curable material, the patient can give the replacement element its proximally correct shape by means of a chewing movement of his jaws. Accordingly, the invention also relates to such a cap.

The mould is preferably made of a form-retaining, readily tearable material, so that the shape of the prosthesis is predictable and the mould can easily be removed after curing of the curable material.

When the dental prosthesis is to be fitted at a location where the dental elements are not arranged in a straight line, it may be desirable to bend the connecting bar slightly to conform to the shape of the row of dental elements. In such a case, the dental set preferably includes a device for bending a connecting bar.

A device for bending a connecting bar preferably comprises two legs which are provided with a hand grip for moving the legs relative to each other at one end and with bending means at the other end, wherein the bending means of one leg comprise two spaced-apart pins and the bending means of the other leg comprise one pin disposed between the other pins. It is preferred, however, to use a device wherein one pin is capable of movement towards the connecting line between the two other pins.

When the connecting bars are supplied in one length dimension, it will be necessary to reduce the connecting bar as needed. To that end, the required length of the connecting bar will have to be determined. Said length will depend on the spacing between the two adjacent elements. In such a case it is preferable, therefore, for the dental set to include a device for determining the distance between two dental elements.

As the dimension in longitudinal direction of the recess in the adjacent elements into which the connecting bar is placed preferably amounts to no more than one sixth of the length of the element in that direction when carrying out the method according to the invention, it is preferred to determine the length of the adjacent elements as well. Thus, a simple verification of the dimension of the recesses in the adjacent elements is possible. Consequently, the invention also relates to a device for determining the distance between two dental elements, which device comprises a strip-shaped member having two main surfaces, wherein a first, fixed plate-shaped projection and a second, fixed plate-shaped projection are present on the first main surface, and wherein the second projection is movable in longitudinal direction with respect to the first projection. The device is suitably provided with a scale division.

When the mould intended for use in the method according to the invention is to be provided with recesses for receiving the connecting bar, it is preferable for the set according to the invention to comprise a device for forming recesses in the mould as well. Preferably, the required recess in one operation can be obtained with one operation in that case. To that end, the invention also comprises a device for forming recesses in a mould which is provided with a cutting surface having a width which is identical to that of the recess to be formed.

The invention will now be explained in more detail with reference to the drawings, which show embodiments of the method and parts of the dental set according to the invention.
Figs. 1A and 1B are longitudinal sectional views of a part of the set of teeth, showing, respectively, a prosthesis is fitted between two adjacent elements and a mould placed between two adjacent elements, Figs. 1C and 1D are perspective views of, respectively, a mould and a cap for said mould.
Fig. 2 is a schematic perspective view, wherein two replacement elements are placed as a prosthesis between two adjacent elements.
Fig. 3A is a longitudinal sectional view, showing a dental prosthesis comprising two replacement elements placed between two adjacent elements, Fig. 3B is a more detailed view of a recess in an adjacent element.
Fig. 4 is a longitudinal sectional view wherein a dental prosthesis comprising two replacement elements is placed between two adjacent elements.
Fig. 5 is a perspective view wherein a dental prosthesis, which comprises two connecting bars, is placed between two adjacent elements.
Fig. 6A is a longitudinal sectional view of a prosthesis and two adjacent elements, wherein the connecting bar is supported by supporting means, Figs. 6A and 6C are perspective views of two embodiments of the supporting means.
Figs. 7A and 7B are top plan views of a longitudinal section of a prosthesis, wherein, respectively, two complete connecting bars and one complete and one partial connecting bar are used.

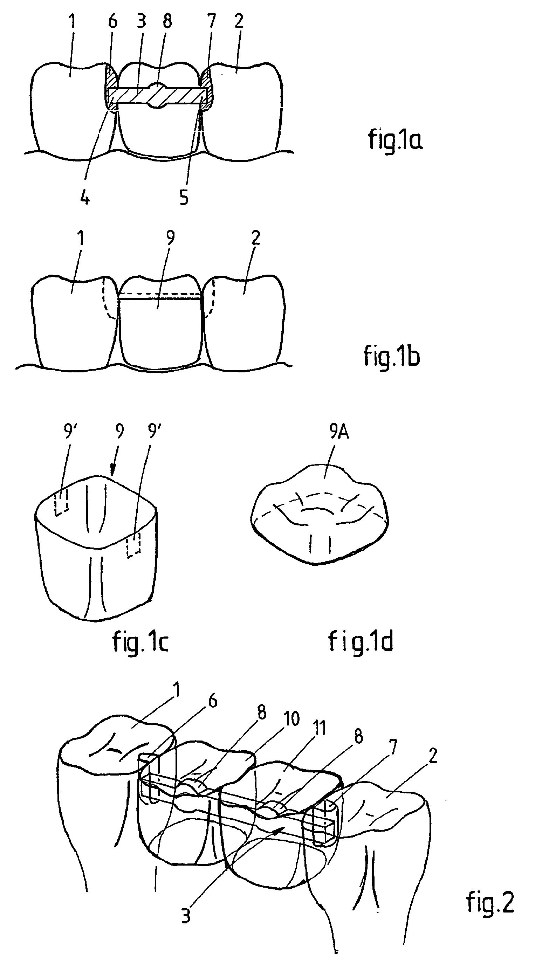

In the drawings, and in particular in Fig. 1A, a connecting bar 3 is placed between a first dental element 1 and a second dental element 2, which bar rests with its respective ends 4, 5 in recesses 6, 7 formed in said dental elements. In this embodiment, the connecting bar 3 is centrally provided with a thickening 8. Such a thickening 8 provides a larger joining surface and thus a better adherence between the connecting bar and a curable material, of which a replacement element is formed between the dental elements 1 and 2.

Fig. 1B shows how a mould 9 is placed between the two elements 1, 2. Fig. 1C also shows a mould 9 in perspective view. In addition to that, Fig. 1D shows a cap 9A in perspective view.

Fig. 2 shows another embodiment, wherein the prosthesis comprises two replacement elements 10, 11. The ends of the connecting bar 3 are placed in recess 6, 7 in the adjacent elements 1, 2. A surrounding dotted line shows the area over which the prosthesis is joined to the adjacent elements. In this embodiment the connecting bar 3 comprises two thickenings 8, which are positioned approximately in the centre of the two replacement elements 10, 11. A prosthesis of this kind, which supports two replacement elements, can be suitably made by placing two separate moulds between the adjacent elements 1, 2. When the moulds are slightly deformable, a proper adjoining relation will be obtained between the moulds, and consequently also between the two replacement elements. When the recesses for receiving the connecting bar in the mould are made sufficiently large at the location where the two moulds touch one another, that is, larger than the cross-sectional area of the connecting bar, a solid connection between the two replacement elements will be obtained at that location when the moulds are filled with the curable material, wherein the connecting bar is entirely surrounded by the curable material at the location of the joining surface of the two replacement elements. Because of this, and because of the fact that the connecting bar extends through the two replacement elements, a very strong connection between each replacement element and the respective adjacent dental element will be obtained. When the adjacent dental element is slightly bevelled and etched at the location of the recesses, in which the connecting bar will be supported, the curable material will form a very strong connection with the dental element at that location, also when the mould is provided with a recess of identical size. It is preferable, therefore, for the recesses for receiving the connecting bars in the mould to be larger than the cross-sectional area of the connecting bars themselves, as a result of which it is possible for the curable material to form a connection with the adjacent dental element at the location of the recesses in the mould.

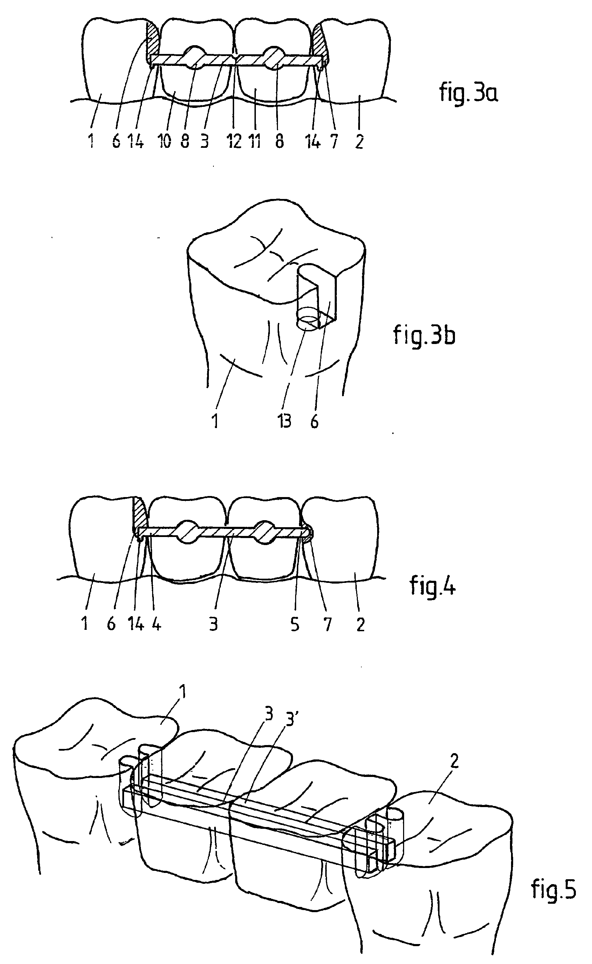

Fig. 3 shows a longitudinal sectional view of a prosthesis, together with two adjacent dental elements 1, 2, to which said prosthesis is attached. The prosthesis of the present embodiment comprises two replacement elements 10, 11. In this embodiment the connecting bar 3 is slightly thinned at point 12 between the two replacement elements 10, 11. If no additional curable material is provided to form a connection between the two res, and consequently the connection between the two replacement elements only consists of the connecting bar, said point 12 can undergo a deformation when forces are exerted on the prosthesis, as a result of which the stress will be removed from the connection between the prosthesis and the adjacent elements.

Fig. 3B is a perspective view of the dental element 1 of Fig. 3A, which clearly shows the shape of the recess 6 in the dental element 1. A deepened portion 13 extending in a direction away from the occlusal surface is present inside recess 6 in element 1, which deepened portion is capable of receiving a projection 14 present on one end of the connecting bar 3. When a connecting bar having such a shape is used, a very rigid connection between the connecting bar and an adjacent dental element can be obtained.

Fig. 4 is a sectional view of a variant similar to the sectional view of Fig. 3A. A connecting bar 3 is placed between two dental elements 1, 2 by inserting a straight end 5 into a recess 7 in element 2 and placing an end 4 comprising an additional projection into a recess 6 provided with a deepened portion. As a result of this arrangement, only one element needs to be formed with a recess extending as far as the upper surface. It is noted that it is also possible to use an end 4 which does not comprise a projection and a recess 6 which is not provided with a deepened portion 13.

Fig. 5 shows an embodiment, wherein two connecting bars 3, 3' are placed between two dental elements 1, 2 present on either side of the prosthesis. Especially in the case of a large prosthesis an embodiment of this kind can be suitably used. It is possible thereby to use two moulds, which each comprise a separate recess for receiving an individual connecting bar, or which comprise one larger size recess, which is capable of receiving both connecting bars. The latter embodiment is preferred, since a larger joining surface between the prosthesis and the adjacent elements is obtained.

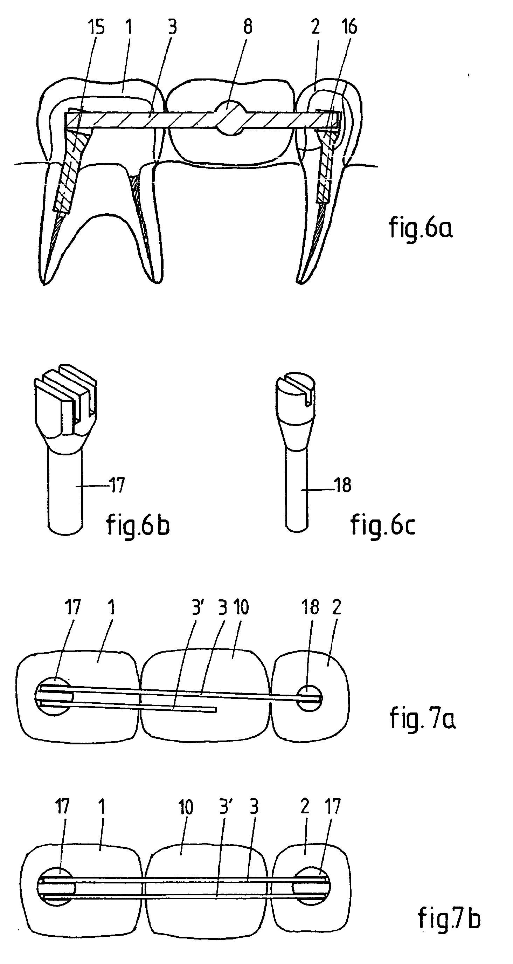

Fig. 6A is a cross-sectional view of an alternative embodiment. In this embodiment, supporting means 15, 16 are disposed in the root canal of the adjacent elements 1, 2. This may be necessary in particular when a large part of the adjacent elements 1, 2 is no longer present, or when the adjacent element is not strong enough. Fig. 6B is a perspective view of a supporting means 17 provided with two grooves at one end thereof, which grooves are each so dimensioned that a connecting bar can be received therein with a close fit. Fig. 6C is a perspective view of a supporting means 18 provided with one groove, which is so dimensioned that one connecting bar can be received therein with a close fit.

Fig. 7 shows two exemplary embodiments, with Fig. 7A showing an embodiment wherein a supporting means 17 as shown in Fig. 6B is present in one adjacent dental element 1 and wherein a supporting means 18 as shown in Fig. 6C is present in the other adjacent dental element 2. An embodiment such as this one is for example required when the dental element 1 is large enough to receive a double connecting bar, but dental element 2 is too small to receive two connecting bars. Fig. 7B shows the manner in which a supporting means 17 is provided in the two adjacent dental elements 1, 2 for supporting two connecting bars. Furthermore it is apparent from said figure that the connecting bars extend as far as the opposite part of the adjacent elements, seen from the side of the prosthesis. An embodiment of this kind must be used when only little remains of the two adjacent dental elements. In this case it is possible to provide one connecting bar, wherein said connecting bar also gives some strength to the two adjacent elements.

From the foregoing it will be apparent that a method for making a dental prosthesis to replace one or more dental elements can be carried out very easily. The method leads to a very strong prosthesis which is connected to the adjacent element by means of a precise and strong joint. This method furthermore has the advantage that the adjacent elements remain substantially entirely intact. When using the dental set according to the invention it is very easy to form a dental prosthesis which is connected to the adjacent elements by means of a precise and strong joint.

The recesses 6 in both dentals elements may be provided with deepened portions 13 in all cases, whereby also the connecting bars are provided with projections 14 at their ends. Furthermore it is possible not to form a deepened portion in either one of the recesses 6, in which case the connecting bars will not be provided with a projection, either.

The invention is not restricted to the above-described embodiment as shown in the drawings, which can be varied in several ways without departing from the scope of the claims.

## Claims

1. A dental set comprising a connecting bar (3) intended for placement between two dental elements (1, 2) on either side of an element to be replaced, and a mould (9) for forming a replacement element, the mould (9) being closed on a side intended to face the jaw and being provided with an opening on a side intended to be remote from the jaw.

2. A set according to claim 1, further comprising a curable material for forming a replacement element.

3. A set according to claim 1 or 2, further comprising a plurality of supporting means (15, 16, 17, 18) for supporting a connecting bar (3).

4. A set according to claim 3, wherein the supporting means (15, 16, 17, 18) for the connecting bar (3) is provided at one end thereof with means for supporting at least one connecting bar (3), and wherein said supporting means (15, 16, 17, 18) is suitable for being placed in the root canal of a dental element (1, 2).

5. A set according to any one of the claims 1 - 4, wherein said mould is made of a form-retaining, tearable material.

6. A set according to any one of the claims 1 - 5, wherein the mould is slightly deformable.

7. A set according to any one of the claims 1 - 6, further comprising a cap for said mould, said cap having the shape of the upper surface of a dental element.

8. A set according to any one of the claims 1 - 7, wherein the connecting bar is provided with a thickening at the location of the prosthesis to be formed.

9. A set according to any one of the claims 1 - 8, wherein the connecting bar is provided with a projection on at least one end thereof.

10. A set according to any one of the claims 1 - 9 for making a dental prosthesis to replace more than one element, wherein the connecting bar between the two replacement elements to be formed is thinned.

11. A set according to any one of the claims 1 - 10, wherein the connecting bar is bent to conform to the shape of the jaw.

12. A set according to any one of the claims 1 - 11, further comprising a device for bending a connecting bar, and/or a device for forming recesses in a mould, and/or a device for determining the distance between two dental elements.

13. A set according to claim 12, wherein the device for bending a connecting bar comprises two legs which are provided with a hand grip for moving the legs relative to each other at one end and with bending means at the other end, wherein the bending means of one leg comprise two spaced-apart pins and the bending means of the other leg comprise one pin disposed between the other pins.

14. A set according to claim 13, wherein one pin of the device for bending a connecting bar is capable of movement towards a connecting line between the two other pins.

15. A set according to any one of the claims 12 - 14, wherein the device for forming recesses in a mould comprises a cutting surface having a width which equals the dimension of the recess to be formed.

16. A set according to any one of the claims 12 - 15, wherein the device for determining the distance between two dental elements comprises a strip-shaped member having two main surfaces, wherein a first, fixed plate-shaped projection and a second, fixed plate-shaped projection are present on the first main surface, and wherein the second projection is movable in longitudinal direction with respect to the first projection.

## Patentansprüche

1. Dental-Set, das einen Verbindungsstab (3), der dazu vorgesehen ist, zwischen zwei Zahnelementen (1, 2) auf beiden Seiten eines zu ersetzenden Elements angeordnet zu werden, und eine Form (9) zum Formen eines Ersatzelements umfasst, wobei die Form (9) auf einer Seite, die dem Kiefer zugewendet sein soll, geschlossen ist und auf einer Seite, die sich entfernt von dem Kiefer befinden soll, mit einer Öffnung versehen ist.

2. Set nach Anspruch 1, das ferner ein härtbares Material zum Formen eines Ersatzelements umfasst.

3. Set nach Anspruch 1 oder 2, das ferner mehrere Unterstützungsmittel (15, 16, 17, 18) zum Unterstützen eines Verbindungsstabs (3) umfasst.

4. Set nach Anspruch 3, wobei das Unterstützungsmittel (15, 16, 17, 18) für den Verbindungsstab (3) an einem Ende mit Mitteln zum Unterstützen wenigstens eines Verbindungsstabs (3) versehen sind und wobei das Unterstützungsmittel (15, 16, 17, 18) in dem Wurzelkanal eines Zahnelements (1, 2) angeordnet werden kann.

5. Set nach einem der Ansprüche 1-4, wobei die Form aus einem formerhaltenden, zerbrechbaren Material hergestellt ist.

6. Set nach einem der Ansprüche 1-5, wobei die Form geringfügig verformbar ist.

7. Set nach einem der Ansprüche 1-6, das ferner eine Kappe für die Form umfasst, wobei die Kappe die Form der oberen Oberfläche eines Zahnelements hat.

8. Set nach einem der Ansprüche 1-7, wobei der Verbindungsstab an der Stelle, an der die Prothese gebildet werden soll, mit einer Verdickung versehen ist.

9. Set nach einem der Ansprüche 1-8, wobei der Verbindungsstab an wenigstens einem Ende mit einem Vorsprung versehen ist.

10. Set nach einem der Ansprüche 1-9 zum Herstellen einer Dentalprothese, um mehr als ein Element zu ersetzen, wobei der Verbindungsstab zwischen den zwei zu bildenden Ersatzelementen verdünnt ist.

11. Set nach einem der Ansprüche 1-10, wobei der Verbindungsstab gebogen ist, damit er an die Form des Kiefers angepasst ist.

12. Set nach einem der Ansprüche 1-11, das ferner eine Vorrichtung zum Biegen eines Verbindungsstabs und/oder eine Vorrichtung zum Bilden von Aussparungen in einer Form und/oder eine Vorrichtung zum Bestimmen des Abstandes zwischen zwei Zahnelementen umfasst.

13. Set nach Anspruch 12, wobei die Vorrichtung zum Biegen eines Verbindungsstabs zwei Schenkel umfasst, die an einem Ende mit einem Handgriff zum Bewegen der Schenkel relativ zueinander und am anderen Ende mit Biegemitteln versehen sind, wobei die Biegemittel eines Schenkels zwei beabstandete Stifte umfassen und die Biegemittel des anderen Schenkels einen zwischen den anderen Stiften angeordneten Stift umfassen.

14. Set nach Anspruch 13, wobei sich ein Stift der Vorrichtung zum Biegen eines Verbindungsstabs zu einer Verbindungslinie zwischen den zwei anderen Stiften bewegen kann.

15. Set nach einem der Ansprüche 12-14, wobei die Vorrichtung zum Bilden von Aussparungen in einer Form eine Schneidoberfläche umfasst, die eine Breite besitzt, die gleich der Abmessung der zu bildenden Aussparung ist.

16. Set nach einem der Ansprüche 12-15, wobei die Vorrichtung zum Bestimmen des Abstandes zwischen zwei Zahnelementen ein streifenförmiges Element mit zwei Hauptoberflächen umfasst, wobei an der ersten Hauptoberfläche ein erster, fester plattenförmiger Vorsprung und ein zweiter, fester plattenförmiger Vorsprung vorhanden sind und wobei der zweite Vorsprung in Längsrichtung in Bezug auf den ersten Vorsprung beweglich ist.

## Revendications

1. Kit dentaire, comprenant une barre de connexion (2), prévue pour être placée entre deux éléments dentaires (1, 2) sur chaque côté d'un élément à remplacer, et un moule (9), pour former un élément de remplacement, le moule (9) étant fermé sur un côté prévu pour se trouver face à la mâchoire et étant muni d'une ouverture sur un côté prévu pour être distant de la mâchoire.

2. Kit selon la revendication 1, comprenant en outre un matériau polymérisable, pour former un élément de remplacement.

3. Kit selon la revendication 1 ou 2, comprenant en outre une pluralité de moyens de support (15, 16, 17, 18), pour supporter une barre de connexion (3).

4. Kit selon la revendication 3, dans lequel les moyens de support (15, 16, 17, 18) pour la barre de connexion (3) sont munis, à l'une de leurs extrémités, de moyens pour supporter au moins une barre de connexion (3), et dans lequel lesdits moyens de support (15, 16, 17, 18) conviennent pour être placés dans le canal de racine d'un élément dentaire (1, 2).

5. Kit selon l'une quelconque des revendications 1 à 4, dans lequel ledit moule est formé d'un matériau déchirable, à conservation de forme.

6. Kit selon l'une quelconque des revendications 1 à 5, dans lequel ledit moule est légèrement déformable.

7. Kit selon l'une quelconque des revendications 1 à 6, comprenant en outre une coiffe pour ledit moule, ladite coiffe ayant la forme de la surface supérieure d'un élément dentaire.

8. Kit selon l'une quelconque des revendications 1 à 7, dans lequel la barre de connexion est munie d'un épaississement, à l'emplacement de la prothèse à former.

9. Kit selon l'une quelconque des revendications 1 à 8, dans lequel la barre de connexion est munie d'une saillie, sur au moins une extrémité de celle-ci.

10. Kit selon l'une quelconque des revendications 1 à 9, pour fabriquer une prothèse dentaire, afin de remplacer plus d'un élément, dans lequel la barre de connexion entre les deux éléments de remplacement à former est amincie.

11. Kit selon l'une quelconque des revendications 1 à 10, dans lequel la barre de connexion est cintrée, pour se conformer à la forme de la mâchoire.

12. Kit selon l'une quelconque des revendications 1 à 11, comprenant en outre un dispositif pour cintrer une barre de connexion, et/ou un dispositif pour former des cavités dans un moule, et/ou un dispositif pour déterminer la distance entre deux élément dentaires.

13. Kit selon la revendication 12, dans lequel le dispositif pour cintrer une barre de connexion comprend deux pattes, munies d'une poignée pour déplacer les pattes l'une par rapport à l'autre, à une extrémité, et de moyens de cintrage, à l'autre extrémité, dans lequel les moyens de cintrage d'une patte comprennent deux tiges espacées l'une de l'autre, et les moyens de cintrage de l'autre patte comprennent une tige, disposée entre les autres tiges.

14. Kit selon la revendication 13, dans lequel le dispositif pour cintrer une barre de connexion est capable d'un déplacement vers une ligne de liaison, entre les deux autres tiges.

15. Kit selon l'une quelconque des revendications 12 à 14, dans lequel le dispositif pour former des cavités dans un moule comprend une surface de coupe, d'une largeur égale à la dimension de la cavité à former.

16. Kit selon l'une quelconque des revendications 12 à 15, dans lequel le dispositif pour déterminer la distance entre deux éléments dentaires comprend un organe en forme de bande, comprenant deux surfaces principales, dans lequel une première saillie, en forme de plaque fixe, et une deuxième saillie, en forme de plaque fixe, sont présentes sur la première surface principale, et dans lequel la deuxième saillie est déplaçable en direction longitudinale par rapport à la première saillie.
